# EUROPÄISCHE PATENTSCHRIFT

(11) **EP 3 953 154 B1**
(45) Veröffentlichungstag und Bekanntmachung des Hinweises auf die Patenterteilung: **27.03.2024**
(21) Anmeldenummer: 20722482.5
(22) Anmeldetag: 09.04.2020
(51) Int. Cl.: B29C 65/18, B29C 65/78, A47K 11/02

(54) **SCHWEISSEINHEIT**
WELDING UNIT
UNITÉ DE SOUDAGE

(30) Priorität: 12.04.2019 DE 102019109686
(43) Veröffentlichungstag der Anmeldung: 16.02.2022
(73) Patentinhaber: CLOSAC AG, 9472 Grabs (CH)
(72) Erfinder: FREI, Christian, 9463 Oberriet (CH); JUD, Remo, 9108 Jakobsbad (CH); KILGA, Marcel, 6845 Hohenems (AT)
(74) Vertreter: Otten, Roth, Dobler & Partner mbB Patentanwälte
(86) Internationale Anmeldenummer: PCT/EP2020/060290
(87) Internationale Veröffentlichungsnummer: WO 2020/208211

(56) Entgegenhaltungen:
- WO-A1-2012/160077
- DE-A1-102009 044 120
- JP-A- 2006 069 579
- US-A1- 2015 164 293
- US-A1- 2016 347 491

## Beschreibung

Die Erfindung betrifft eine Schweißeinheit zum thermischen Verschweißen von Folienschläuchen, insbesondere für eine wasserlose Toilette, gemäß dem Oberbegriff des Anspruchs 1 sowie eine wasserlose Toilette nach Anspruch 12.

Aus dem Stand der Technik sind wasserlose Toiletten und Schweißeinheiten hierfür, zum Verschweißen von entsprechenden Folienschläuchen bereits bekannt. Aus der CH 581 462 A5 ist ein System bekannt dessen Schlauchvorrat ein Paar Spreizfinger zugeordnet ist, über die der vom Vorrat abgezogene Schlauch geführt wird.

Nachteilig ist hierbei insbesondere, dass die bekannten Schweißeinheiten einen linearen Verlauf der Schweißmittel aufweisen, wodurch ein Zusammenführen der Schweißbacken nur sehr langsam erfolgen kann. Dementsprechend langsam erfolgt das Verschweißen eines mit Fäkalien gefüllten Folienschlauchs der wasserlosen Toilette. Außerdem lässt sich die Folie vom Schweißbalken nach dem Schweißen nur schwer lösen und kann schlechtesten falls mit dem darauffolgenden Beutel verschweißt werden.

Das Dokument DE 10 2009 044120 A1 offenbart eine Schweißeinheit zum thermischen Verschweißen von Folien mit zwei Gelenkanordnungen und zwei Servomotoren.

Das Dokument JP 2006 069579 A offenbart eine Schweißeinheit zum thermischen Verschweißen von Folien mit einer Transportanordnung.

Aufgabe der Erfindung ist es, eine Schweißeinheit, insbesondere für eine wasserlose Toilette bereitzustellen, mittels der das Verschweißen von Folienschläuchen prozesssicher und zügig durchführbar ist.

Die Erfindung betrifft eine Schweißeinheit zum thermischen Verschweißen von Folienschläuchen, insbesondere für eine wasserlose Toilette, nach Anspruch 1.

Jedes Schweißmittel ist mittels wenigstens einer Gelenkanordnung beweglich ausgebildet, wobei die wenigstens eine Gelenkanordnung zumindest einen Gelenkhebel umfasst.

Diese nicht lineare Bewegung der Schweißmittel ermöglicht ein schnelleres Bewegen der Schweißmittel und somit ein schnelleres Verschweißen des Folienschlauchs. Das schnellere Bewegen kann auch aus einer Streckenverkürzung infolge der Anordnung der Schweißmittel an Gelenkhebeln verstanden werden.

Gelenkhebel, insbesondere in Form von Kniehebel-Gelenken haben die Eigenschaft, das Sie mit zunehmender Streckung des Hebelgelenks, bis die Gelenkhebel einen Winkel von 180° einschließen und damit den sogenannten Totpunkt erreicht haben, eine zügige Bewegung mit kontrollierter Endlage ausführen können.

Jede Gelenkanordnung zum Bewegen der Schweißmittel umfasst zumindest einen elektrischen Antrieb.

Hierdurch kann mittels einer einfachen Konstruktion eine direkte Ansteuerung und Automatisierung der Bewegung der Schweißmittel ermöglicht werden. Elektromotoren können als Direktantriebe, insbesondere synchronisierte Direktantriebe, oder ergänzend über Getriebe und Übersetzungen angebracht sein, damit die notwendige Kraft für die Bewegung erzielt wird.

In einer weiteren vorteilhaften Ausgestaltung der Erfindung kann vorgesehen sein, dass die Gelenkanordnungen jeweils mittels wenigstens eines Zahnrades mit dem elektrischen Antrieb wirkverbunden sind.

Hierdurch kann eine effiziente Kraftübertragung auf die Schweißmittel über die Gelenkhebel bereitgestellt werden, wodurch insbesondere ein zuverlässiges Verschweißen von Folienschläuchen ermöglicht werden kann. Zahnräder erlauben überdies die unmittelbare Realisierung einer Über- oder Untersetzung eine Abtriebswelle des Antriebs und gestatten überdies eine kompakte Bauweise durch ein Ineinandergreifen des Anstriebsstrangs.

Um eine weitere Verbesserung des Schweißergebnisses durch zielgerichtete Schweißmittel erzielen zu können, kann in einer weiteren sehr vorteilhaften Ausgestaltung der Erfindung vorsehen sein, dass zum Führen der Schweißmittel zumindest ein Führungsmittel umfasst ist, das vorzugsweise wenigstens eine Kulisse umfasst.

Die Kulisse führt die bewegten Komponenten insbesondere an der Seite präzise und ist in der Lage, etwaige Kräfte Aufzunehmen, welche ggf. ansonsten als Querkräfte auf die Gelenkanordnungen einwirken würden. Dies verbessert die Prozesssicherheit und Stabilität der Anordnung.

Ein besonders gutes Schweißergebnis kann auch durch eine Weiterbildung der Erfindung dahingehend realisierbar sein, dass zwei Gelenkanordnungen vorhanden sind, die spiegelsymmetrisch zueinander angeordnet sind, wobei jede Gelenkanordnung mindestens zwei, vorzugsweise drei Gelenkhebel umfasst und wobei die Gelenkhebel jeder Gelenkanordnung jeweils auf einer gemeinsamen Welle angeordnet sind.

Die Symmetrie der Anordnung erlaubt eine prozesssichere Durchführung des Schweißprozesses im Mittleren Bereich der Anordnung, was u.a. auch die zu überwindenden Wege der Schweißmittel verringert und damit die Geschwindigkeit der Prozesses erhöht.

Um ein effizientes Transportieren eines Folienschlauchs ermöglichen zu können, ist vorgesehen, dass eine Transportanordnung zum Transportieren eines zu Verschweißenden und/oder verschweißten Folienschlauchs umfasst ist.

Dabei ist die Transportanordnung zumindest anteilig im Verlauf des Folienschlauchs oberhalb der Schweißmittel oder unterhalb der Schweißmittel oder beidseits (oben und unten) der Schweißmittel angeordnet.

Insbesondere die Anordnung einer Transportanordnung unterhalb des Folienschlauchs, oder zumindest die Anbringung von Transportmitteln unterhalb des Folienschlauchs bietet den Vorteil, dass nach Beendigung des Schweißprozesses die Schweißbacken zurückgezogen werden können, und das Transportmittel oberhalb und/oder unterhalb der Schweißbacken den Folienschlauch an Ort und Stelle hält. Auf diese Weise wird ein Festkleben an den Schweißmitteln verhindert, da die Folie von diesen abgezogen wird.

Überdies ist dazu vorgesehen, dass die Gelenkanordnungen, insbesondere die Gelenkhebel die Transportmittel versetzt, bevorzugt den Schweißmitteln nacheilend und/oder von den Schweißmitteln entkoppelt bewegen.

Um das Transportieren eines Folienschlauchs weiter zu verbessern, ist erfindungsgemäß vorgesehen, dass die Transportanordnung zweiteilig ausgestaltet ist und ein erstes Transportmittel und ein zweites Transportmittel umfasst, wobei das erste Transportmittel zumindest ein Walzenelement umfasst und wobei das zweite Transportmittel wenigstens ein Walzenelement umfasst, wobei das erste Transportmittel und das zweite Transportmittel zum Transportieren des Folienschlauchs mittels wenigstens eines elektrischen Antriebs, vorzugsweise mittels zwei elektrischen Antrieben relativ zueinander bewegbar sind.

Voneinander getrennte Transportmittel lassen ein gleichmäßiges gegenseitiges Greifen des Folienschlauchs zu und verbessern den Transport in Geschwindigkeit, Führung und die Zuverlässigkeit z.B. bei knicken und überlappenden Lagen.

Der Transport eines Folienschlauchs kann weiter verbessert werden, indem die Transportmittel jeweils mehrere, bevorzugt je zwischen zwei und sechs, voneinander beabstandete Walzenelemente umfassen.

Die Walzenelemente bieten dem Folienschlauch hinreichend Flächenhaftung, und erlauben dem System aus transportiertem Folienschlauch, zwischen den Walzenelementen freie, entspannte Bereiche auszubilden, was die Prozesssicherheit beim Transport erhöht.

Eine Ausgestaltung der Erfindung kann vorsehen, dass das erste Transportmittel und das zweite Transportmittel jeweils mittels wenigstens eines Zahnrades mit jeweils einem elektrischen Antrieb wirkverbunden sind und wobei der jeweils eine elektrische Antrieb vorzugsweise mit jeweils einer Gelenkanordnung wirkverbunden ist. Hierdurch kann eine effiziente Kraftübertragung auf die Transportmittel bereitgestellt werden, wodurch ein zuverlässiger Transport eines Folienschlauchs ermöglicht werden kann.

Die Erfindung kann in einer vorteilhaften Ausgestaltung auch vorsehen, dass jedes Transportmittel jeweils zumindest ein abgewinkeltes Haltemittel umfasst, wobei die abgewinkelten Haltemittel der Transportmittel zueinander spiegelsymmetrisch angeordnet sind. Hierdurch kann ein vergrößerter Raum zwischen zwei Transportmitteln erhalten werden. Dies kann sich vorteilhaft auf die Aufnahmekapazität des Folienschlauchs für Fäkalien auswirken und damit auch eine verbesserte Nutzerfreundlichkeit für einen Benutzer ermöglichen.

Weiterhin kann in einer vorteilhaften Ausgestaltung der Erfindung vorgesehen sein, dass das erste Transportmittel und das zweite Transportmittel jeweils entlang des Führungsmittels beweglich angeordnet sind, wobei das Führungsmittel im Wesentlichen hantelförmig ausgebildet ist und an seinen jeweiligen Endabschnitten im Vergleich zu einem Mittenabschnitt größere Höhe aufweist.

Hierdurch kann sozusagen ein Hinausfahren jeder Transporteinheit ermöglicht werden, wodurch ein vergrößerter Raum zwischen zwei Transportmitteln erhältlich sein kann. Dies kann sich vorteilhaft auf die Aufnahmekapazität des Folienschlauchs für Fäkalien auswirken und damit auch eine verbesserte Nutzerfreundlichkeit für einen Benutzer ermöglichen.

In einer Weiterbildung der Erfindung kann vorgesehen sein, dass mindestens ein Federmittel umfasst ist, das mit wenigstens einem Schweißmittel zur Erzeugung einer Anpresskraft auf den Folienschlauch wirkverbunden ist.

Durch den Einsatz eines Federmittels kann erzielt werden, dass die Anpresskraft auf den Folienschlauch beim Schweißprozess nicht durch die Gelenkhebel selbst, sondern durch die Federwirkung erzielt und/oder unterstützt ist. Dadurch wird z.B. ein Überstrecken der Gelenkhebel, insbesondere über den Totpunkt hinweg, nicht notwendig oder die Aufbringung und das Halten der Anpresskraft durch die Antriebe muss nicht zwingend gegeben sein. Dies spart ggf. Kosten bei der Dimensionierung der Antriebe. Durch eine überdies durch die Federwirkung erhöhte Anpresskraft des Schweißmittels auf den Folienschlauch kann das Schweißergebnis deutlich verbessert werden.

Eine weitere Verbesserung des Schweißergebnisses kann dadurch erhältlich sein, dass mindestens zwei Federmittel umfasst sind, wobei jedes Schweißmittel mit zumindest einem der mindestens zwei Federmittel wirkverbunden ist, wobei die mindestens zwei Federmittel als gleichartige oder verschiedenartige Federmittel ausgebildet sind. Auf diese Weise kann die Symmetrie der Kraftwirkung verbessert werden.

Vorteilhaft im Hinblick auf die Verbesserung des Schweißergebnisses ist zudem, wenn das mindestens eine Federmittel als Zugfeder oder als Druckfeder ausgebildet ist.

Eine vorteilhafte Ausgestaltung der Erfindung betrifft vorzugsweise eine wasserlose Toilette, umfassend eine Schweißeinheit zum Verschließen von Folienschläuchen, wobei die Schweißeinheit nach einem der beigefügten Ansprüche, insbesondere nach einer der oben dargelegten Ausführungsformen, ausgebildet ist.

Eine derartige Toilette zeichnet sich insbesondere dadurch aus, dass ein schnelles und zuverlässiges Verschweißen eines mit Fäkalien gefüllten Folienschlauchs erfolgt.

Nachstehend wird die Erfindung anhand von Zeichnung näher erläutert. Hierbei zeigt:
- Fig. 1:: eine stark vereinfachte schematische Darstellung eines Ausschnitts einer erfindungsgemäßen Schweißeinheit;
- Fig. 2:: eine stark vereinfachte schematische Darstellung einer Weiterbildung der in Fig. 1 gezeigten Schweißeinheit;
- Fig. 3:: die in Fig. 2 gezeigte Schweißeinheit in einer anderen Positionsstellung;
- Fig. 4a:: eine stark vereinfachte schematische Seitenansicht einer erfindungsgemäßen Schweißeinheit in einer ersten Position;
- Fig. 4b:: eine stark vereinfachte schematische Seitenansicht einer erfindungsgemäßen Schweißeinheit in einer zweiten Position;
- Fig. 4c:: eine stark vereinfachte schematische Seitenansicht einer erfindungsgemäßen Schweißeinheit in einer dritten Position;
- Fig. 4d:: eine stark vereinfachte schematische Seitenansicht einer erfindungsgemäßen Schweißeinheit in einer vierten Position.

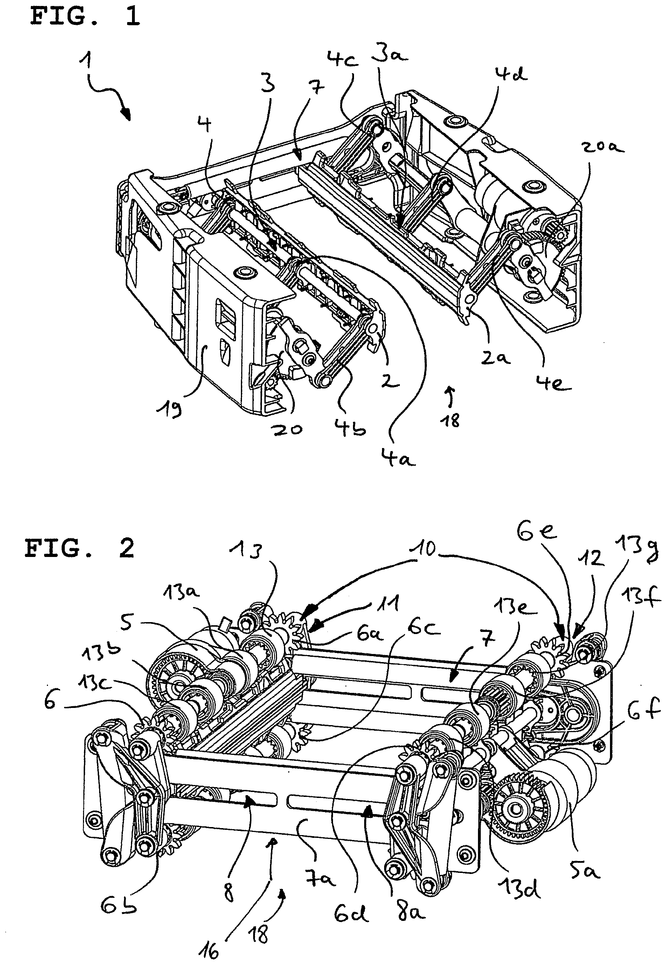

In der Fig. 1 ist eine stark vereinfachte schematische Darstellung eines Ausschnitts einer erfindungsgemäßen Schweißeinheit 1 gezeigt. Zum verbesserten Verständnis ist in der Fig. eine vordere Ansichtsseite 18 offen gelassen. Entsprechend der Fig. 2 vorzugsweise ein Führungsmittel 7a angeordnet.

Die in Fig. 1 gezeigt Schweißeinheit 1 ist in einer Position gezeigt, die als Ruheposition aufgefasst werden kann.

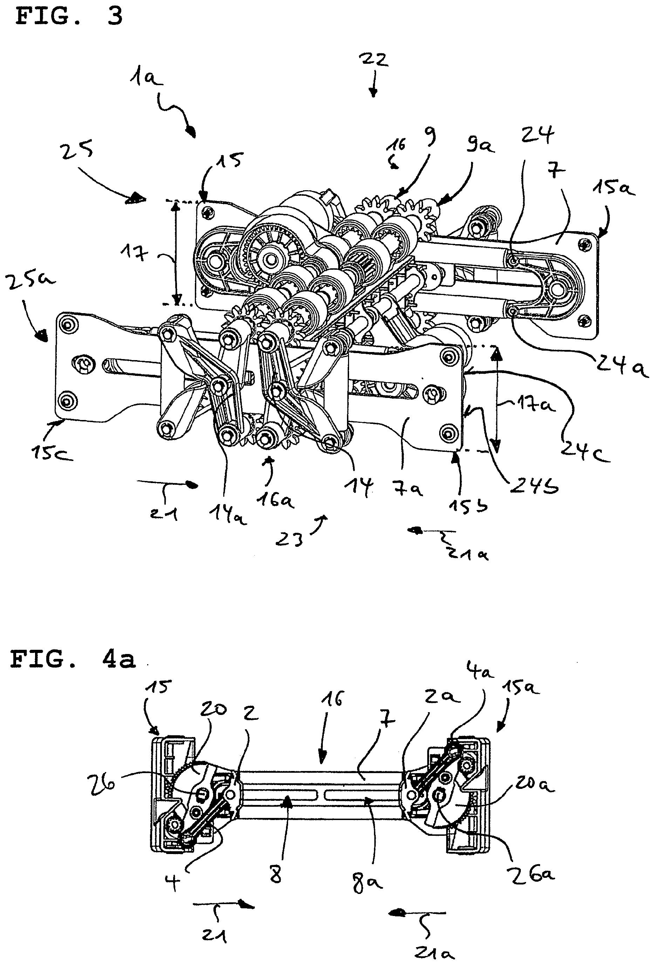

Der Ablauf beim Verschweißen eines Folienschlauchs ist den Fig. 4a bis 4d detaillierter zu entnehmen.

Die Schweißeinheit 1 gemäß Fig. 1 ist zum thermischen Verschweißen von Folienschläuchen, insbesondere für eine wasserlose Toilette (nicht gezeigt) vorgesehen, wobei zwei relativ zueinander bewegbare Schweißmittel 2, 2a zum thermischen Verschweißen eines Folienschlauches umfasst sind.

Jedes Schweißmittel 2, 2a ist mittels einer Gelenkanordnung 3, 3a beweglich ausgebildet ist, wobei die wenigstens eine Gelenkanordnung 3, 3a zumindest einen Gelenkhebel 4, 4a-4e umfasst.

Vorliegend umfasst jede Gelenkanordnung 3, 3a mehrere, nämlich jeweils drei Gelenkhebel 4, 4a-4e.

Jede Gelenkanordnung 3, 3a umfasst zum Bewegen einen elektrischen Antrieb 5, 5a (siehe Fig. 2 und Fig. 3).

Optional kann die Schweißeinheit 1 einen Rahmen 19 umfassen. Aus Gründen vereinfachter Darstellung ist in den Fig. 2 und ein derartiger Rahmen nicht gezeigt; kann aber gleichwohl entsprechend umfasst sein.

In der Ausgestaltung der Schweißeinheit 1a gemäß Fig. 2 ist zusätzlich eine Transportanordnung 10 umfasst, wobei diese zum Transportieren eines nicht näher gezeigten zu Verschweißenden und/oder verschweißten Folienschlauchs vorgesehen ist.

Die Transportanordnung 10 gemäß Ausführungsbeispiel (Fig. 2) ist zweiteilig ausgestaltet und umfasst ein erstes Transportmittel 11 und ein zweites Transportmittel 12. Dabei umfasst das erste Transportmittel 11 Walzenelemente 13-13c umfasst und das zweite Transportmittel 12 Walzenelemente 13d-13g. Das erste Transportmittel 11 und das zweite Transportmittel 12 sind zum Transportieren des nicht näher dargestellten Folienschlauchs mittels je eines elektrischen Antriebs 5, 5a, also mittels zwei elektrischen Antrieben relativ zueinander bewegbar. Diese relative Bewegbarkeit kann auch der Fig. 3 entnommen werden, in der die Transportmittel 11, 12 sozusagen in zusammengefahrenem Zustand dargestellt sind.

In der Ausführung der Schweißeinheit 1a nach Fig. 2 bzw. nach Fig. 3 umfassen die Transportmittel 11, 12 jeweils mehrere, voneinander beabstandete Walzenelemente 13-13g.

Das erste Transportmittel 11 und das zweite Transportmittel 12 sind jeweils mittels Zahnräder 20, 20a (siehe z.B. Fig. 1, Fig. 4a) mit jeweils einem elektrischen Antrieb 5, 5a (siehe z.B. Fig. 2) wirkverbunden. Der jeweils eine elektrische Antrieb 5, 5a ist mit jeweils einer Gelenkanordnung 3, 3a wirkverbunden über entsprechende Zahnradanordnungen.

Ferner umfasst jedes Transportmittel 11, 12 jeweils abgewinkelte Haltemittel 14, 14a. Die abgewinkelten Haltemittel 14, 14a (siehe z.B. Fig. 3) der Transportmittel 11, 12 sind zueinander spiegelsymmetrisch angeordnet.

Im Ausführungsbeispiel nach Fig. 1 bzw. Fig. 2 sind das erste Transportmittel 11 und das zweite Transportmittel 12 jeweils entlang des Führungsmittels 7, 7a beweglich angeordnet. Das Führungsmittel 7, 7a ist im Wesentlichen hantelförmig ausgebildet weist an seinen jeweiligen Endabschnitten 15, 15a, 15b, 15c im Vergleich zu einem Mittenabschnitt 16, 16a siehe auch Fig. 4a) größere Höhe 17, 17a auf.

Es sind gemäß Fig. 2 mehrere Zahnräder 6, 6a-e umfasst. Die Hauptaufgabe der Zahnräder 6, 6a-e ist der Transport eines Folienschlauchs. Beim Zusammenfahren der Transportmittel 11, 12 entlang Bewegungsrichtungen 21, 21a (siehe auch Fig. 3 sowie Fig. 4a) greifen die Zahnräder ineinander und die Drehbewegung für den Folientransport bzw. Transport des Folienschlauchs wird auf die Gegenrolle, d.h. Transporteinheit übertragen.

Daher kann in einer besonders vorteilhaften Ausgestaltung der Erfindung vorgesehen sein, dass nur ein Antrieb pro Transportmittel 11, 12 vorgesehen ist. Dies kann eine erhebliche Vereinfachung der Konstruktion der Schweißeinheit 1, 1a bedeuten.

Sollte die Folie am Schweißmittel 2, 2a kleben bleiben, so ist aufgrund der Zahnräder ebenfalls die Zugkraft gewährleistet, um diese zu lösen.

Obgleich in den Figuren mehrere Zahnräder 6, 6a-e gezeigt sind, kann in einer Ausgestaltung der Erfindung vorgesehen sein, dass Die Anzahl der Zahnräder ist auf vier beträgt, wobei diese Zahnräder, die nur einseitig verbaut sind, derart, dass je ein Paar für oben, also an einer Oberseite 22 und unten, also an einer Unterseite 23 vorgesehen ist.

Die Schweißeinheit 1, 1a umfasst entsprechend den Ausgestaltungen gemäß Fig. 1 und Fig. 2 zum Führen der Schweißmittel 2, 2a Führungsmittel 7, 7a. Die Führungsmittel 7, 7a umfassen je eine Kulisse 8, 8a (siehe z.B. Fig. 2 und Fig. 4a) .

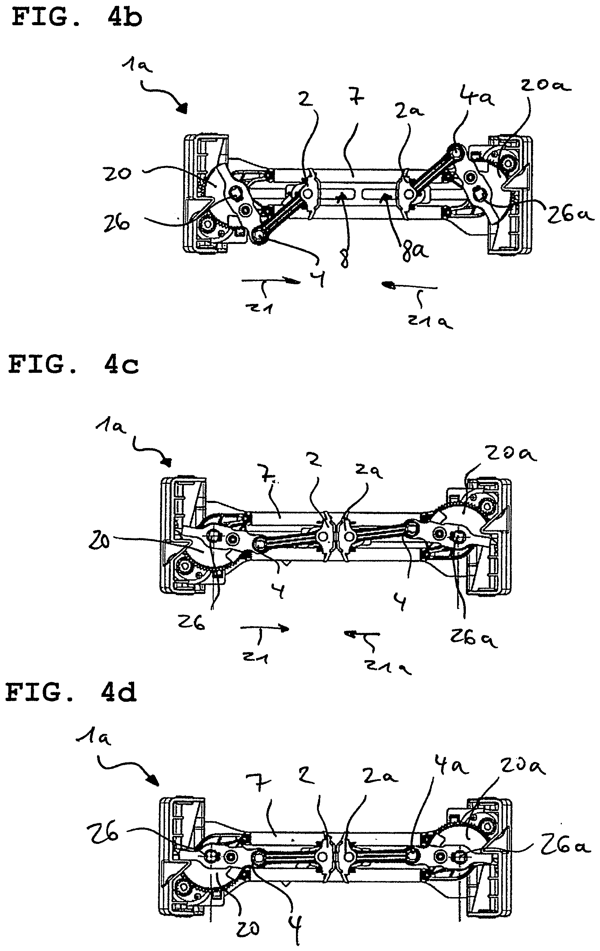

Um einen mit Fäkalien gefüllten Folienschlauch (nicht gezeigt) mittels der Schweißeinheit 1, 1a zu verschweißen, werden Schweißmittel 2, 2a (siehe z.B. Fig. 4a) jeweils entlang Bewegungsrichtungen 21, 21a relativ zueinander bewegt, bis sie zusammengeführt sind (Fig. 4d). In dieser zusammengeführten Position kann das thermische Verschweißen eines Folienschlauchs erfolgen. In Fig. 4d ist zu erkennen, dass die Gelenkhebel bis kurz vor ihrem Totpunkt gestreckt sind, da die den Schweißmitteln 2,2a abgewandten Gelenkpunkte der Gelenkhebel 4 und 4a nicht auf einer Linie liegen. Ein Bewegen bis zum Totpunkt oder gar ein Überschreiten würde ein Geräusch, bis zu hin einem schlagartigen Impuls im System mit sich bringen, da die Anpresskraft am Totpunkt ihr Maximum aufweist. Dies kann ggf. als unangenehm oder fehlerhaft empfunden werden.

Die Bewegung der Schweißmittel 2, 2a erfolgt dabei nicht linear, sondern mittels Gelenkhebel 4, 4a (siehe z.B. Fig. 4a bis Fig. 4d), welche von einer Gelenkanordnung (siehe Fig. 1) umfasst sind.

Durch die gelenkartige Bewegung der Schweißmittel 2, 2a kann deren Wegstrecke gegenüber einer linearen Bewegung reduziert bzw. beschleunigt werden. Hierdurch kann der Schweißvorgang zum Verschließen eines Folienschlauchs entsprechend beschleunigt werden.

Die gelenkartige Bewegung kann überdies auch für die Transportanordnung 10 (siehe Fig. 2) vorgesehen sein. Die vorstehend genannten Vorteile gelten analog.

In einer weiteren nicht näher dargestellten Möglichkeit kann es im Rahmen der Erfindung auch vorgesehen sein, dass die Gelenkanordnung bzw. die entsprechenden Gelenkhebel über ihren jeweiligen Totpunkt überfahrbar ausgebildet sind bzw. über einen jeweiligen Totpunkt überfahren werden.

In der Fig. 3 ist gezeigt, dass Federmittel 24, 24a, 24b, 24c umfasst sind, die mit Schweißmittel 2, 2a zur Erzeugung einer Anpresskraft auf den Folienschlauch (nicht gezeigt) wirkverbunden ist.

Da der Aufbau der Schweißeinheit 1 symmetrisch ist, wirken Federmittel auf beide Schweißmittel.

Es kann möglich sein, dass Federmittel über Achsen 26, 26a (siehe z.B. Fig. 4a, 4b, 4c, 4d) der Zahnräder 20, 20a mit Schweißmitteln wirkverbunden sind.

Ergänzend oder alternativ kann möglich sein, dass Federmittel über Gelenkhebel 4, 4a-e mit Schweißmitteln wirkverbunden sind.

In nicht näher gezeigter Art und Weise kann auch möglich sein, dass lediglich ein Federmittel umfasst ist das mit einem Schweißmittel zur Erzeugung einer Anpresskraft auf den Folienschlauch wirkverbunden ist.

Federmittel 24, 24a, 24b, 24c können als Zugfeder oder als Druckfeder (nicht gezeigt) ausgestaltet sein.

Möglich kann auch sein, dass mehrere Federmittel vorhanden sind, wobei als Zugfeder und als Druckfeder ausgeführte Federmittel vorhanden sind (nicht gezeigt).

Im gezeigten Ausführungsbeispiel gemäß Fig. 3 sind mehrere Federmittel 24, 24a, 24b, 24c umfasst. Dabei ist jedes Schweißmittel mit Federmitteln wirkverbunden. Aus Gründen vereinfachter Darstellung sind lediglich Federmittel 24, 24a der Bauteilkomponente 25 (Fig. 3) sowie Federmittel 24b, 24c der Bauteilkomponente 25a (Fig. 3) dargestellt. Diese sind mit Schweißmittel 2 wirkverbunden (siehe hierzu Fig. 1); weitere nicht dargestellte Federmittel sind jedoch im Hinblick auf die spiegelsymmetrisch angeordneten Bauteilkomponenten 25, 25a und insbesondere auch auf Schweißmittel 2 möglich und insbesondere vorgesehen.

Im gezeigten Ausführungsbeispiel sind die Federmittel 24, 24a, 24b, 24c als gleichartige Federmittel ausgebildet. In nicht näher gezeigter Art und Weise kann es auch möglich sein, das verschiedenartige Federmittel, z.B. Druckfedern und Zugfedern, vorhanden sind.

### Bezugszeichenliste:

- 1: Schweißeinheit
- 1a: Schweißeinheit
- 2: Schweißmittel
- 2a: Schweißmittel
- 3: Gelenkanordnung
- 3a: Gelenkanordnung
- 4: Gelenkhebel
- 4a: Gelenkhebel
- 4b: Gelenkhebel
- 4c: Gelenkhebel
- 4d: Gelenkhebel
- 4e: Gelenkhebel
- 5: Antrieb
- 5a: Antrieb
- 6: Zahnrad
- 6a: Zahnrad
- 6b: Zahnrad
- 6c: Zahnrad
- 6d: Zahnrad
- 6e: Zahnrad
- 6f: Zahnrad
- 7: Führungsmittel
- 7a: Führungsmittel
- 8: Kulisse
- 8a: Kulisse
- 9: Welle
- 9a: Welle
- 10: Transportanordnung
- 11: erstes Transportmittel
- 12: zweites Transportmittel
- 13: Walzenelement
- 13a: Walzenelement
- 13b: Walzenelement
- 13c: Walzenelement
- 13d: Walzenelement
- 13e: Walzenelement
- 13f: Walzenelement
- 13g: Walzenelement
- 14: Haltemittel
- 14a: Haltemittel
- 15: Endabschnitt
- 15a: Endabschnitt
- 15b: Endabschnitt
- 15c: Endabschnitt
- 16: Mittenabschnitt
- 16a: Mittenabschnitt
- 17: Höhe
- 17a: Höhe
- 18: vordere Ansichtsseite
- 19: Rahmen
- 20: Zahnrad
- 20a: Zahnrad
- 21: Bewegungsrichtung
- 21a: Bewegungsrichtung
- 22: Oberseite
- 23: Unterseite
- 24: Federmittel
- 24a: Federmittel
- 24b: Federmittel
- 24c: Federmittel
- 25: Bauteilkomponente
- 25a: Bauteilkomponente
- 26: Achse
- 26a: Achse

## Patentansprüche

1. Schweißeinheit (1, 1a) zum thermischen Verschweißen von Folienschläuchen, insbesondere für eine wasserlose Toilette, wobei zumindest zwei relativ zueinander bewegbare Schweißmittel (2, 2a) zum thermischen Verschweißen eines Folienschlauches umfasst sind,
wobei jedes Schweißmittel (2, 2a) mittels wenigstens einer Gelenkanordnung (3, 3a) beweglich ausgebildet ist, wobei die wenigstens eine Gelenkanordnung (3, 3a) zumindest einen Gelenkhebel (4, 4a-4e) umfasst,
wobei jede Gelenkanordnung (3, 3a) zum Bewegen zumindest einen elektrischen Antrieb (5, 5a) umfasst,
wobei eine Transportanordnung (10) zum Transportieren eines zu Verschweißenden und/oder verschweißten Folienschlauchs umfasst ist und die Transportanordnung zumindest anteilig im Verlauf des Folienschlauchs oberhalb der Schweißmittel (2, 2a) oder unterhalb der Schweißmittel (2, 2a) oder beidseits, nämlich oben und unten,
der Schweißmittel (2, 2a) angeordnet ist,
wobei die Transportanordnung (10) zweiteilig ausgestaltet ist und ein erstes Transportmittel (11) und ein zweites Transportmittel (12) umfasst,
wobei das erste Transportmittel (11) zumindest ein Walzenelement (13-13c) umfasst und wobei das zweite Transportmittel(12) wenigstens ein Walzenelement (13d-13g) umfasst,
wobei das erste Transportmittel (11) und das zweite Transportmittel (12) zum Transportieren des Folienschlauchs mittels wenigstens eines elektrischen Antriebs (5, 5a), vorzugsweise mittels zwei elektrischen Antrieben relativ zueinander bewegbar sind.

2. Schweißeinheit (1, 1a) nach Anspruch 1, wobei die Gelenkanordnungen (3, 3a) jeweils mittels wenigstens eines Zahnrades (6, 6a-6f) mit dem elektrischen Antrieb (5, 5a) wirkverbunden sind.

3. Schweißeinheit (1, 1a) nach einem der vorangehenden Ansprüche, wobei zum Führen der Schweißmittel (2, 2a) zumindest ein Führungsmittel (7, 7a) umfasst ist, das vorzugsweise wenigstens eine Kulisse (8, 8a) umfasst.

4. Schweißeinheit (1, 1a) nach einem der vorangehenden Ansprüche, wobei zwei Gelenkanordnungen (3, 3a) vorhanden sind, die spiegelsymmetrisch zueinander angeordnet sind, wobei jede Gelenkanordnung (3, 3a) mindestens zwei, vorzugsweise drei Gelenkhebel (4, 4a-4e) umfasst und wobei die Gelenkhebel (4, 4a-4e) jeder Gelenkanordnung (3, 3a) jeweils auf einer gemeinsamen Welle (9, 9a) angeordnet sind.

5. Schweißeinheit (1, 1a) nach einem der vorangehenden Ansprüche, wobei die Gelenkanordnungen, insbesondere die Gelenkhebel, die Transportmittel versetzt, bevorzugt den Schweißmitteln nacheilend und/oder von den Schweißmitteln entkoppelt versetzt.

6. Schweißeinheit (1, 1a) nach einem der vorangehenden Ansprüche, wobei die Transportmittel (11, 12) jeweils mehrere, bevorzugt je zwischen zwei und sechs, voneinander beabstandete Walzenelemente (13-13g) umfassen.

7. Schweißeinheit (1, 1a) nach Anspruch 6, wobei das erste Transportmittel (11) und das zweite Transportmittel (12) jeweils mittels wenigstens eines Zahnrades (20, 20a) mit jeweils einem elektrischen Antrieb (5, 5a) wirkverbunden sind und wobei der jeweils eine elektrische Antrieb (5, 5a) vorzugsweise mit jeweils einer Gelenkanordnung (3, 3a) wirkverbunden ist.

8. Schweißeinheit (1, 1a) nach einem der vorangehenden Ansprüche, wobei jedes Transportmittel (11, 12) jeweils zumindest ein abgewinkeltes Haltemittel (14, 14a) umfasst, wobei die abgewinkelten Haltemittel (14, 14a) der Transportmittel (11, 12) zueinander spiegelsymmetrisch angeordnet sind.

9. Schweißeinheit (1, 1a) nach Anspruch 4 und Anspruch 8, wobei das erste Transportmittel (11) und das zweite Transportmittel (12) jeweils entlang des Führungsmittels (7, 7a) beweglich angeordnet sind, wobei das Führungsmittel (7, 7a) im Wesentlichen hantelförmig ausgebildet ist und an seinen jeweiligen Endabschnitten (15, 15a, 15b, 15c) im Vergleich zu einem Mittenabschnitt (16, 16a) größere Höhe (17, 17a) aufweist.

10. Schweißeinheit (1, 1a) nach einem der vorangehenden Ansprüche, wobei mindestens ein Federmittel (24, 24a, 24b, 24c) umfasst ist, das mit wenigstens einem Schweißmittel (2, 2a) zur Erzeugung einer Anpresskraft auf den Folienschlauch während des Schweißvorgangs wirkverbunden ist, vorzugsweise wobei das mindestens eine Federmittel (24, 24a, 24b 24c) als Zugfeder oder als Druckfeder ausgebildet ist..

11. Schweißeinheit (1, 1a) nach einem der vorangehenden Ansprüche, wobei mindestens zwei Federmittel (24, 24a, 24b, 24c) umfasst sind, wobei jedes Schweißmittel (2, 2a) mit zumindest einem der mindestens zwei Federmittel (24, 24a, 24b, 24c) zur Erzeugung einer Anpresskraft auf den Folienschlauch während des Schweißvorgangs wirkverbunden ist, wobei die mindestens zwei Federmittel als gleichartige oder verschiedenartige Federmittel ausgebildet sind.

12. Schweißeinheit (1, 1a) nach einem der vorangehenden Ansprüche, wobei die Gelenkanordnung/en (3, 3a) und ein/die Mittel zum Bewegen der Gelenkanordnung/en (3, 3a) sowie bevorzugt ein/das/die Führungsmittel (7, 7a) derart aufeinander abgestimmt sind, dass die Gelenkanordnung/en (3,3a) nur bis zu einem Winkel von 189° streckbar sind, insbesondere ein Überschreiten des der Totpunktes der Gelenkanordnung/en (3, 3a) blockiert ist.

## Claims

1. Welding unit (1, 1a) for the thermal welding of film tubes, in particular for a waterless toilet, wherein at least two welding means (2, 2a) which can be moved relative to one another are comprised for the thermal welding of a film tube,
wherein each welding means (2, 2a) is configured to be movable by means of at least one joint arrangement (3, 3a), wherein the at least one joint arrangement (3, 3a) comprises at least one articulated lever (4, 4a-4e),
wherein each joint arrangement (3, 3a) comprises at least one electric drive (5, 5a) for movement purposes,
wherein a transport arrangement (10) is comprised in order to transport a film tube which is to be welded and/or which has been welded and the transport arrangement is arranged at least partially in the course of the film tube above the welding means (2, 2a) or below the welding means (2, 2a) or on both sides of, namely above and below, the welding means (2, 2a),
wherein the transport arrangement (10) is of two-part design and comprises a first transport means (11) and a second transport means (12),
wherein the first transport means (11) comprises at least one roller element (13-13c) and wherein the second transport means (12) comprises at least one roller element (13d-13g),
wherein the first transport means (11) and the second transport means (12) are movable relative to one another by means of at least one electric drive (5, 5a), preferably by means of two electric drives, in order to transport the film tube.

2. Welding unit (1, 1a) according to Claim 1, wherein the joint arrangements (3, 3a) are each operatively connected to the electric drive (5, 5a) by means of at least one gearwheel (6, 6a-6f).

3. Welding unit (1, 1a) according to either of the preceding claims, wherein at least one guide means (7, 7a), which preferably comprises at least one slotted guide (8, 8a), is comprised in order to guide the welding means (2, 2a).

4. Welding unit (1, 1a) according to one of the preceding claims, wherein two joint arrangements (3, 3a) are present which are arranged mirror-symmetrically with respect to one another, wherein each joint arrangement (3, 3a) comprises at least two, preferably three, articulated levers (4, 4a-4e) and wherein the articulated levers (4, 4a-4e) of each joint arrangement (3, 3a) are arranged in each case on a common shaft (9, 9a).

5. Welding unit (1, 1a) according to one of the preceding claims, wherein the joint arrangements, in particular the articulated levers, offset the transport means, preferably offset them so as to trail the welding means and/or so as to be decoupled from the welding means.

6. Welding unit (1, 1a) according to one of the preceding claims, wherein the transport means (11, 12) each comprise a plurality of, preferably between two and six, roller elements (13-13g) which are spaced apart from one another.

7. Welding unit (1, 1a) according to Claim 6, wherein the first transport means (11) and the second transport means (12) are each operatively connected to a respective electric drive (5, 5a) by means of at least one gearwheel (20, 20a) and wherein the respective one electric drive (5, 5a) is preferably operatively connected to a respective joint arrangement (3, 3a).

8. Welding unit (1, 1a) according to one of the preceding claims, wherein each transport means (11, 12) comprises in each case at least one angled retaining means (14, 14a), wherein the angled retaining means (14, 14a) of the transport means (11, 12) are arranged mirror-symmetrically with respect to one other.

9. Welding unit (1, 1a) according to Claim 4 and Claim 8, wherein the first transport means (11) and the second transport means (12) are each arranged so as to be movable along the guide means (7, 7a), wherein the guide means (7, 7a) is of substantially dumbbell-shaped configuration and has a greater height (17, 17a) at its respective end sections (15, 15a, 15b, 15c) compared to a central section (16, 16a).

10. Welding unit (1, 1a) according to one of the preceding claims, wherein at least one spring means (24, 24a, 24b, 24c) is comprised, which is operatively connected to at least one welding means (2, 2a) in order to generate a contact pressure on the film tube during the welding operation, wherein the at least one spring means (24, 24a, 24b, 24c) is preferably configured as a tension spring or as a compression spring.

11. Welding unit (1, 1a) according to one of the preceding claims, wherein at least two spring means (24, 24a, 24b, 24c) are comprised, wherein each welding means (2, 2a) is operatively connected to at least one of the at least two spring means (24, 24a, 24b, 24c) in order to generate a contact pressure on the film tube during the welding operation, wherein the at least two spring means are configured as similar or different types of spring means.

12. Welding unit (1, 1a) according to one of the preceding claims, wherein the joint arrangement(s) (3, 3a) and a/the means for moving the joint arrangement(s) (3, 3a) and preferably a/the guide means (7, 7a) are coordinated with one another in such a way that the joint arrangement (s) (3, 3a) can only be extended up to an angle of 189°, in particular exceedance of the dead centre of the joint arrangement(s) (3, 3a) is blocked.

## Revendications

1. Unité de soudage (1, 1a) destinée à souder thermiquement des tuyaux de film, destinés notamment à des toilettes sans eau,
au moins deux moyens de soudage (2, 2a) mobiles l'un par rapport à l'autre étant prévus pour souder thermiquement un tuyau de film,
chaque moyen de soudage (2, 2a) étant conçu pour être mobile au moyen d'au moins un ensemble articulé (3, 3a),
l'au moins un ensemble articulé (3, 3a) comprenant au moins un levier articulé (4, 4a-4e),
chaque ensemble articulé (3, 3a) comprenant au moins un entraînement électrique (5, 5a) destiné au déplacement,
un ensemble de transport (10) étant inclus pour transporter un tuyau de film soudé et/ou à souder et l'ensemble de transport étant disposé au moins en partie le long du tuyau de film au-dessus des moyens de soudage (2, 2a) ou au-dessous des moyens de soudage (2, 2a) ou des deux côtés, à savoir au-dessus et au-dessous, des moyens de soudage (2, 2a),
l'ensemble de transport (10) étant conçu en deux parties et comprenant un premier moyen de transport (11) et un deuxième moyen de transport (12),
le premier moyen de transport (11) comprenant au moins un élément formant rouleau (13-13c) et le deuxième moyen de transport (12) comprenant au moins un élément formant rouleau (13d-13g),
le premier moyen de transport (11) et le deuxième moyen de transport (12) pouvant être déplacés l'un par rapport à l'autre au moyen d'au moins un entraînement électrique (5, 5a), de préférence au moyen de deux entraînements électriques, afin de transporter le tuyau de film.

2. Unité de soudage (1, 1a) selon la revendication 1, les ensembles articulés (3, 3a) étant chacun reliés fonctionnellement à l'entraînement électrique (5, 5a) au moyen d'au moins une roue dentée (6, 6a-6f).

3. Unité de soudage (1, 1a) selon l'une des revendications précédentes, au moins un moyen de guidage (7, 7a), qui comprend de préférence au moins une coulisse (8, 8a), étant inclus pour guider le moyen de soudage (2, 2a).

4. Unité de soudage (1, 1a) selon l'une des revendications précédentes, deux ensembles articulés (3, 3a) étant prévus qui sont disposés en symétrie de miroir l'un par rapport à l'autre, chaque ensemble articulé (3, 3a) comprenant au moins deux, de préférence trois, leviers articulés (4, 4a-4e) et les leviers articulés (4, 4a-4e) de chaque ensemble articulé (3, 3a) étant chacun disposés sur un arbre commun (9, 9a).

5. Unité de soudage (1, 1a) selon l'une des revendications précédentes, les ensembles articulés, en particulier les leviers articulés, changeant les moyens de transport de place, de préférence de manière retardée par rapport aux moyens de soudage et/ou découplée des moyens de soudage.

6. Unité de soudage (1, 1a) selon l'une des revendications précédentes, les moyens de transport (11, 12) comprenant chacun plusieurs, de préférence entre deux et six, éléments de rouleau (13-13g) qui sont espacés les uns des autres.

7. Unité de soudage (1, 1a) selon la revendication 6, le premier moyen de transport (11) et le deuxième moyen de transport (12) étant chacun reliés fonctionnellement à un entraînement électrique (5, 5a) au moyen d'au moins une roue dentée (20, 20a) et chaque entraînement électrique (5, 5a) étant de préférence relié fonctionnellement à un ensemble articulé respectif (3, 3a) .

8. Unité de soudage (1, 1a) selon l'une des revendications précédentes, chaque moyen de transport (11, 12) comprenant au moins un moyen de retenue coudé (14, 14a), les moyens de retenue coudés (14, 14a) des moyens de transport (11, 12) étant disposés en symétrie de miroir les uns par rapport aux autres.

9. Unité de soudage (1, 1a) selon la revendication 4 et la revendication 8, les premiers moyens de transport (11) et les deuxièmes moyens de transport (12) étant chacun disposés de manière mobile le long des moyens de guidage (7, 7a), le moyen de guidage (7, 7a) étant sensiblement en forme d'haltère et ayant une plus grande hauteur (17, 17a) au niveau de ses portions d'extrémité respectives (15, 15a, 15b, 15c) qu'au niveau d'une portion médiane (16, 16a).

10. Unité de soudage (1, 1a) selon l'une des revendications précédentes, au moins un moyen à ressort (24, 24a, 24b, 24c) étant inclus qui est relié fonctionnellement à au moins un moyen de soudage (2, 2a) afin de générer une force de contact sur le tuyau de film pendant le processus de soudage, de préférence l'au moins un moyen à ressort (24, 24a, 24b, 24c) étant conçu comme un ressort de traction ou comme un ressort de compression.

11. Unité de soudage (1, 1a) selon l'une des revendications précédentes, au moins deux moyens à ressort (24, 24a, 24b, 24c) étant inclus, chaque moyen de soudage (2, 2a) étant relié fonctionnellement à l'un au moins des au moins deux moyens à ressort (24, 24a, 24b, 24c) afin de générer une force de contact sur le tuyau de film pendant le processus de soudage, les au moins deux moyens à ressort étant conçus comme des moyens à ressort similaires ou différents.

12. Unité de soudage (1, 1a) selon l'une des revendications précédentes, le ou les ensembles articulés (3, 3a) et un ou les moyens de déplacement du ou des ensembles articulés (3, 3a) et de préférence un, le ou les moyens de guidage (7, 7a) étant adaptés les uns aux autres de telle sorte que le ou les ensembles articulés (3, 3a) ne peuvent être étirés que jusqu'à un angle de 189°, en particulier un franchissement du point mort du ou des ensembles articulés (3, 3a) étant bloqué.
